(19) Europäisches Patentamt
European Patent Office
Office européen des brevets

(11) **EP 3 333 297 B1**

(12) **EUROPEAN PATENT SPECIFICATION**

(45) Date of publication and mention of the grant of the patent:
**30.09.2020 Bulletin 2020/40**

(21) Application number: **16832340.0**

(22) Date of filing: **04.08.2016**

(51) Int Cl.:
**D06F 33/32** *(2020.01)*

(86) International application number:
**PCT/CN2016/093253**

(87) International publication number:
**WO 2017/020852 (09.02.2017 Gazette 2017/06)**

(54) **WASHING MACHINE**

WASCHMASCHINE

MACHINE À LAVER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2015 JP 2015154325**

(43) Date of publication of application:
**13.06.2018 Bulletin 2018/24**

(73) Proprietors:
• **Aqua Co., Ltd.**
**Chiyoda-ku**
**Tokyo 100-0005 (JP)**
• **Qingdao Haier Washing Machine Co., Ltd.**
**Shandong 266101 (CN)**

(72) Inventor: **HOSHINO, Hiroyuki**
**Tokyo 100-0005 (JP)**

(74) Representative: **Gill Jennings & Every LLP**
**The Broadgate Tower**
**20 Primrose Street**
**London EC2A 2ES (GB)**

(56) References cited:
**CN-A- 1 373 541      CN-A- 1 389 619**
**CN-A- 1 580 362      CN-A- 104 790 172**
**CN-Y- 2 773 130      JP-A- H05 253 384**
**JP-B2- 4 406 176      US-A1- 2011 247 148**

## Description

## TECHNICAL FIELD

The present invention relates to a washing machine capable of measuring a load easily and accurately without a sensor.

## BACKGROUND

Detection of a cloth load magnitude of an existing washing machine utilizes the following phenomenon: an output shaft of a motor for driving an impeller for stirring washings can also be rotated in short time due to an inertial force even after the driving is stopped (the motor is powered off) in such a state that water is not injected into a washing drum. After the impeller is driven by the motor for a required time, in a period from a power-off moment of the motor to a stopping moment of the output shaft of the motor, a rotating speed sensor and the like are configured to detect a rotation quantity of the output shaft, compare a detected value with preset threshold values at multiple stages (such as low, medium and high levels) for determination, and judge the load magnitude according to a determination result.

Therefore, for the detection of the load magnitude, a unit for detecting a rotating speed of the motor is required. In a washing machine which uses a frequency converter, a permanent magnet synchronous motor is used; and in order to rotate the permanent magnet synchronous motor, a position (angle) of a rotor always needs to be identified first. Therefore, when used in the washing machine, a Hall IC and other sensors are adopted in most cases and are usually used as rotating speed sensors.

However, since sensorless control in which the sensor is canceled to reduce cost cannot detect a speed when the motor is powered off, the same detection of the load magnitude as an existing manner cannot be performed.

Therefore, as the washing machine which detects the load without using such a rotating speed sensor, as shown in a patent literature 1, a washing machine is proposed as follows: the rotating speed is judged by detecting an induced voltage generated by the motor when the motor is powered off and rotated and converting the induced voltage into a pulse signal for counting.

In addition, as shown in a patent literature 2, a washing machine is proposed as follows: the load magnitude is detected by controlling a vector of the motor with a characteristic that an output torque of the motor is proportional to the load magnitude when the motor is rotated at a constant speed, detecting a q-axis current proportional to the output torque of the motor when the motor is powered on, and computing the output torque of the motor.

However, the washing machine of the patent literature 1 needs to add a circuit for detecting the induced voltage, and has a determination which increases the cost.

In addition, for the washing machine of the patent literature 2, when the output torque of the motor is set to T, a torque constant is set to $K_E$, the number of pole pairs of the motor is set to $P_{pn}$, a flux linkage is set to $\Phi$, and axis currents are set to $I_q$ and $I_d$, characteristics of $T=K_E I_q$ and $K_\beta =P_{pn}\Phi$ are used; however, the torque constant $K_E$ may change under influences of deviation during manufacturing of the motor, motor temperature and motor current, and may be a major factor causing errors in a load magnitude detection result.

Existing Technical Literature

Patent Literature

Patent Literature 1: Japan specifically disclosed No. 05-115670 Bulletin
Patent Literature 2: Japan specifically disclosed No. 2002-360970 Bulletin

US20110247148A1 discloses a method and apparatus that determines a load size of a laundry load located in a laundry treating appliance having a drum defining a treatment chamber that is rotated by a motor based on a given amount of energy applied to the motor, and a measurement of coast time after the given amount of energy is removed.

## SUMMARY

Problems to be solved by the invention

A purpose of the present invention is to realize a washing machine capable of easily measuring a load magnitude without a sensor in same performance as an existing structure for detecting a load with a rotation sensor when a motor is powered off in such a sensorless-controlled washing machine.

Solutions for solving the problems

To achieve the purpose, the present invention adopts the following solutions.

Namely, the washing machine of the present invention includes a permanent magnet synchronous motor which drives, in a rotating manner, an impeller for stirring washings in a washing drum, and a control unit which controls the motor. The control unit includes: a torque command generation portion for generating a torque command according to a deviation between a command value of a motor rotating speed given as a control quantity and an estimated value of the motor rotating speed; a motor driving control portion for converting a deviation between a motor current during driving and a current command value corresponding to a torque command value into motor voltage command values so as to drive the motor; and a speed estimation portion for estimating a motor rotating speed by using motor currents and motor voltages associated with the motor voltage command values. In the washing machine, a load measurement portion is arranged in the control unit and is configured to measure the amount of washings as the load magnitude according to the estimated value of the motor rotating speed estimated by the speed estimation portion in a state that the command of the torque command generation portion is stopped.

Specifically, the load measurement portion preferably measures the load magnitude by utilizing the estimated value of the motor rotating speed estimated by the speed estimation portion according to the motor voltage command value given to the motor when the current command value of the motor driving control portion is 0 by setting the torque command to 0.

In the present invention, preferably, the load measurement portion performs integral to the estimated value of the motor rotating speed during preset load detection; and an integral value is used as the load magnitude.

Further, more preferably, a threshold value is preset in the load measurement portion; and the integral is stopped when the estimated value of the motor rotating speed is less than the threshold value during load detection.

Effects of the invention

According to the present invention described above, when the torque command is stopped, the output torque of the motor is 0, and the motor rotating speed is decreased in a same state as inertial rotation. Moreover, since the motor rotating speed is inversely proportional to the load magnitude, the amount of washings can be effectively measured as the load magnitude as long as the estimated value of the motor rotating speed is used. Furthermore, since a structure of an existing control unit can be utilized, an additional circuit is unnecessary to be assembled as in the case of using the induced voltage, and parameters like the torque constant affected by individual difference, temperature and current of the motor are also not used, the load can be measured simply and accurately.

Although stopping of the motor cannot be judged when application of voltage to the motor is cut off in the present invention, effective measurement can be sought as long as the voltage control is continued in a manner of measuring the load magnitude by utilizing the estimated value of the motor rotating speed estimated by the speed estimation portion based on the motor voltage command value according to the present invention.

In addition, according to the present invention in which the integral value of the estimated value is used as the load magnitude, influences caused by the errors when the load is detected instantaneously can be effectively eliminated.

According to the present invention in which the threshold value is set during integral in this case, a situation that the integral is performed to a region in which the estimated value of the speed does not reflect an actual situation can be avoided, thereby effectively ensuring the measurement accuracy.

## BRIEF DESCRIPTION OF DRAWINGS

Fig. 1 is a stereogram illustrating an appearance of a washing machine in an embodiment of the present invention;
Fig. 2 is a longitudinal section view illustrating a general structure of the same washing machine;
Fig. 3 is a chart illustrating deceleration characteristics of a motor of a motor control system in the same embodiment when the motor is powered off;
Fig. 4 is a block diagram illustrating a system structure of a motor control system constituting a premise structure for load measurement in the same embodiment;
Fig. 5 is a diagram illustrating a general structure of a speed estimation portion of the same motor control system;
Fig. 6 is a diagram illustrating a speed estimation principle of the same motor control system;
Fig. 7 is a diagram illustrating an outline of a PLL control portion of the same motor control system;
Fig. 8 is a flow chart illustrating a processing sequence of the load measurement portion in the same embodiment;

Fig. 9 is a diagram illustrating a measurement range of the load measurement portion in the same embodiment; and
Fig. 10 is a chart illustrating measurement results of the load measurement portion in the same embodiment.

A list of reference numerals

1: Driving unit; 2: Torque command generation portion; 3: Motor driving control portion; 4: Speed estimation portion; 7: Load measurement portion; A1: Washing machine; A4: Washing drum (dewatering drum); M: Motor; $I_d$ and $I_q$: Motor currents; $I_d^*$ and $I_q^*$: Current command values; $V_d$ and $V_q$: Motor voltages; $V_d^*$ and $V_q^*$: Motor voltage command values; $T^*$: Torque command value; $\omega^*_m$: Command value of the motor rotating speed; $\omega_m$: Estimated value of the motor rotating speed; and $\omega_{ref}$: Threshold value.

## DETAILED DESCRIPTION

Embodiments of the present invention are described below with reference to drawings.

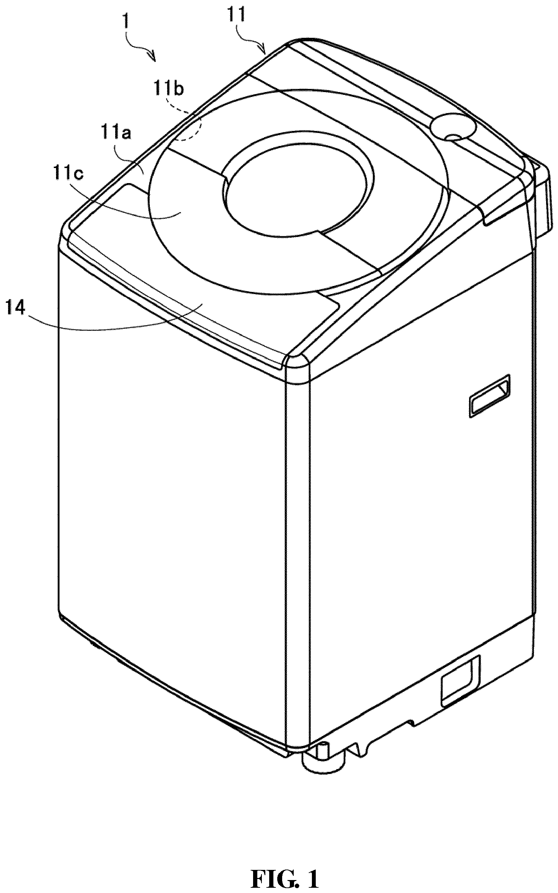

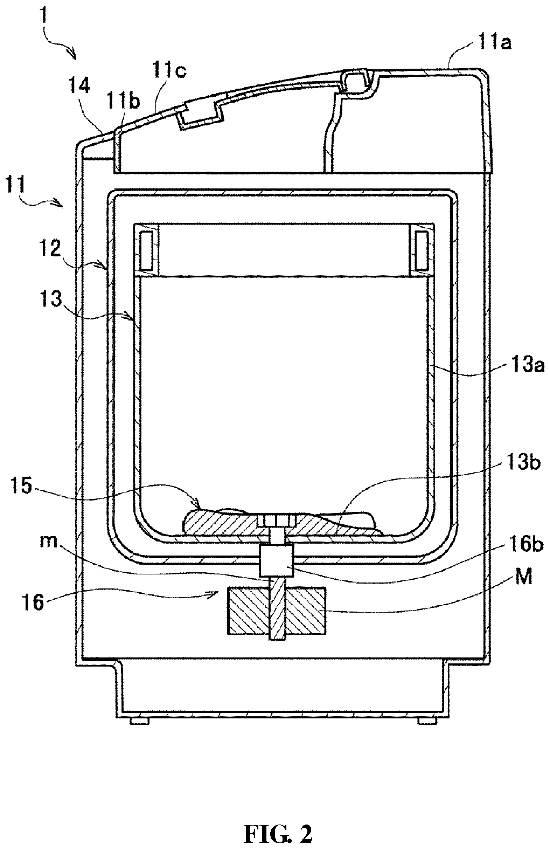

Fig. 1 is a stereogram illustrating an appearance of a vertical washing machine (hereinafter referred to as a "washing machine") 1 in an embodiment of the present invention. In addition, Fig. 2 is a longitudinal section view illustrating a general structure of the washing machine 1 of the present embodiment.

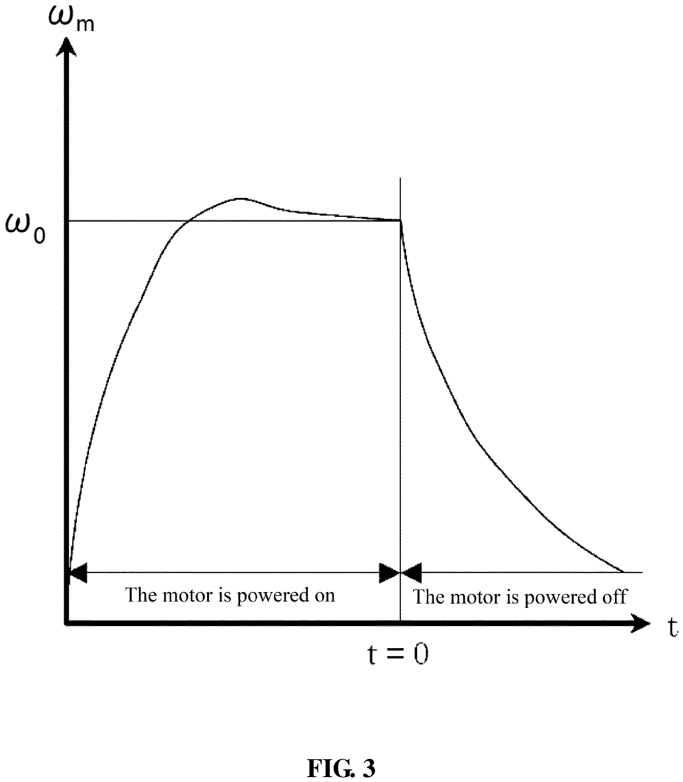

As shown in Fig. 2, the washing machine 1 of the present embodiment includes a washing machine body 11, an outer drum 12, a dewatering drum (washing drum) 13, a driving portion 16 and a control unit C (with reference to Fig. 3). Such a washing machine 1 automatically judges the amount of washings in the dewatering drum 13 as a load magnitude when a start button (not shown) located at an input portion 14 for automatic washing is pressed, automatically determines the volume of water stored in the outer drum 12 in a washing process and a rinsing process according to the load magnitude, and performs washing action. The measurement of the load magnitude is described later.

The washing machine body 11 is of a substantially rectangular shape, and has an opening 11b for throwing washings (clothes) into and taking the washings (clothes) out of the dewatering drum 13 and an opening-closing cover 11c capable of opening and closing the opening 11b in an upper surface 11a. The washings can be thrown into and taken out of the dewatering drum 13 through the opening 11b by opening the opening-closing cover 11c. In addition, the input portion 14 is formed on the upper surface 11 a of such a washing machine body 11.

The outer drum 12 shown in Fig. 2 is a bottomed cylindrical member which is configured inside the washing machine body 11 and can store water.

The dewatering drum 13 used as the washing drum is a bottomed cylindrical member which is configured inside the outer drum 12 coaxially with the outer drum 12 and is freely and rotatably supported by the outer drum 12. The dewatering drum 13 has a diameter smaller than that of the outer drum 12 and has a plurality of water through holes (not shown) in a wall surface 13a.

An impeller (an agitating wing) 15 is freely and rotatably configured at the center of a bottom portion 13b of the dewatering drum 13. The impeller 15 stirs the water stored in the outer drum 12 to generate a water flow.

In addition, the impeller 15 is also driven in a rotating manner before supplying the water to the dewatering drum 13 at the beginning of the washing process. At this time, a detected value obtained in a rotation process of dragging the washings is used for detecting the above load magnitude.

The driving portion 16 includes a motor M and a clutch 16b. The motor M rotates the dewatering drum 13 by rotating a driving shaft m extended to the bottom portion 13a of the dewatering drum 13. Moreover, the motor M can also apply a driving force to the impeller 15 by switching the clutch 16b so as to rotate the impeller 15. Therefore, the washing machine 1 can mainly rotate the impeller 15 only during the washing process and the rinsing process when performing the measurement of the load magnitude described later, and can integrally rotate the dewatering drum 13 and the impeller 15 at a high speed in the dewatering process. The rotating speed of the impeller 5 during load measurement is set to, for example, 800 rpm.

In the present embodiment, when the load magnitude is detected, a rotating quantity of the impeller 15 after a torque command given to the motor M is set to 0 is detected without a sensor so as to measure the load magnitude. Whenever the rotating quantity is detected, a relationship between the load magnitude and a rotating speed is inspected first.

The motor called as SPM motor is used as the motor M in permanent magnet synchronous motors.

Generally, the relationship among the rotating speed of the motor M, the torque and the load (an inertial torque and a friction coefficient) is expressed by the following differential equation, wherein a motor rotating angular speed is set to $\omega_m$, an output torque of the motor is set to T, the inertial torque is set to J, and the friction coefficient is set to B:

$$J \times (d\omega_m/dt) + B \times \omega_m = T \qquad (1).$$

When the motor is powered off, since T=0,

$$J \times (d\omega_m/dt) + B \times \omega_m = 0 \qquad (2).$$

The differential equation is solved to obtain

$$\omega_m = C \times \exp[-(B/J) \times t] \qquad (3).$$

A moment when the motor is powered off is set to t=0. When t=0 and the motor is rotated at $\omega_m = \omega_0$,

$$\omega_m = \omega_0 \times \exp[-(B/J) \times t] \qquad t \geq 0 \qquad (4).$$

From the equation (4), it can be known that when the motor is powered off, the greater the friction coefficient B is, the faster the decrease of the motor rotating angular speed $\omega_m$ is, and the greater the inertial torque J is, the slower the decrease is. The situation is shown in Fig. 3.

It is considered that B is more dominant than J in the detection of the load magnitude before washing by only feeding cloth load and rotating the impeller 15 without injecting the water into the washing drum 13.

Therefore, when judging that the motor is powered off, the faster the decrease of the motor rotating angular speed $\omega_m$ is, the higher the load magnitude is, and the slower the decrease of the motor rotating angular speed $\omega_m$ is, the lower the load magnitude is.

According to the above relationship between the load magnitude and the rotating speed, the motor rotating angular speed $\omega_m$ when the motor is powered off is obtained by utilizing a structure of an original motor control system in the present embodiment.

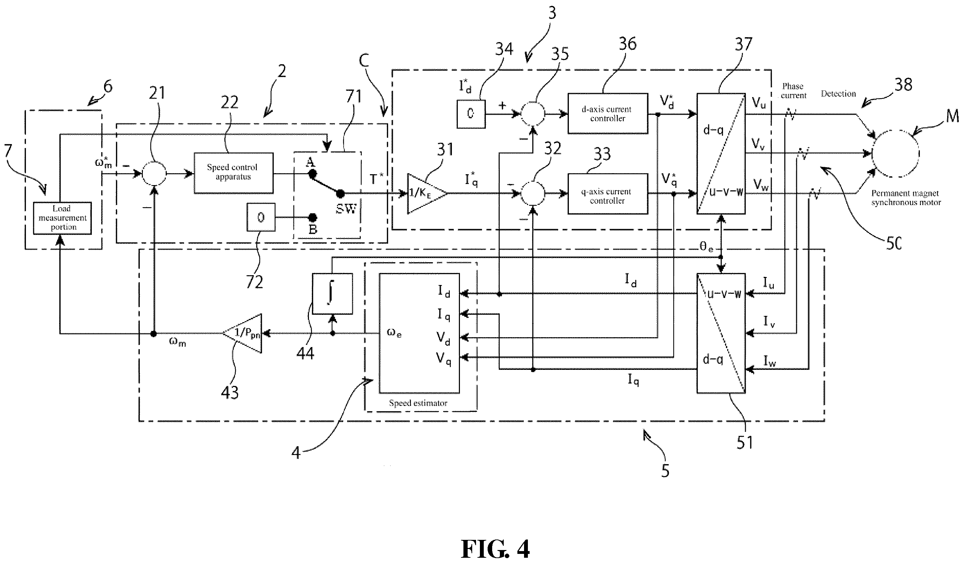

Fig. 4 is a block diagram illustrating vector control of a control unit C constituting a premise for the load measurement of the present invention.

A basic structure of the control unit C includes: a torque command generation portion 2 for generating a torque command according to a deviation between a command value $\omega^*_m$ of a motor rotating speed given as a control quantity and an estimated value $\omega_m$ of the motor rotating speed; a motor driving control portion 3 for converting a deviation between a motor current $I_q(I_d)$ during driving and a current command value $I_q^*(I_d)$ corresponding to a torque command value $T^*$ into motor voltage command values $V^*_q$ and $V^*_d$ and driving the motor M; and a speed estimator 4, i.e., a speed estimation portion for estimating the motor rotating speed $\omega_m$ by using motor currents $I_q$ and $I_d$ and motor voltages $V_q$ and $V_d$ associated with the motor voltage command values $V^*_q$ and $V^*_d$, wherein the speed estimator 4 is configured in a feedback loop 5. The torque command generation portion 2 and the motor driving control portion 3 are general elements constituting an inverter controller. In addition, the motor voltages $V_q$ and $V_d$ equal to the motor voltage command values $V^*_q$ and $V^*_d$ are set herein.

The torque command generation portion 2 firstly inputs a rotating speed command $\omega^*_m$ given by a microcomputer 6 for controlling entire operation of the washing machine 1 and an estimated speed value $\omega_m$ estimated based on a motor driving state into a subtractor 21. A differential output of the subtractor 21 is inputted into a speed controller 22.

In order to control the rotating speed of the motor M to a target value, the speed controller 22 generates a torque command $T^*$ by PI control based on a difference between the rotating speed command $\omega^*_m$ and the estimated speed $\omega_m$.

The torque command $T^*$ generated by the torque command generation portion 22 is inputted into the motor driving control portion 3.

The motor driving control portion 3 performs voltage driving in a coordinate system (d, q) of a magnetic pole which rotates with rotation of a rotor of a synchronous motor M.

Firstly, the torque command value $T^*$ is converted into a q-axis current command value $I_q^*$ by being multiplied by a torque coefficient $1/K_E$ by a gain multiplication portion 31 and is inputted into a q-axis current controller 33 by a subtractor 32. In another aspect, a command value $I_d=0$ is outputted from a d-axis current command portion 34 during washing or rinsing operation and is inputted into a d-axis current controller 36 by a subtractor 35. A q-axis current value $I_q$ outputted from a second converter 51 described later for performing (u-v-w→d-q) conversion is used as a subtraction value and supplied to the subtractor 32; and a d-axis current value $I_q$ outputted from the second converter 51 is used as the subtraction value and supplied to the subtractor 35.

The q-axis current controller 33 generates a q-axis voltage command value $V_q^*$ by performing PI control based on a difference between the q-axis current command value $I_q^*$ and the q-axis current value $I_q$; and a d-axis current controller 36 generates a d-axis voltage command value $V_d{}^*$ by performing PI control based on a difference between a d-axis current command value $I_d{}^*$(=0) and the q-axis current value $I_q$. Then, in order to be converted into a three-phase voltage command, the values are inputted into a first converter 37 for performing (d-q→u-v-w) conversion.

The first converter 37 is given an estimated rotor rotating phase angle $\theta_e$ obtained by integrating an electrical angular speed $\omega_e$ of the motor outputted by the speed estimator 4 described later with an integrator 44, so as to convert q and d voltage command values $V_q{}^*$ and $V_d{}^*$ into three-phase voltage command values $V_u$, $V_v$ and $V_w$ according to the estimated rotor rotating phase angle $\theta_e$, and powers on the motor M by a motor excitation circuit 38.

In another aspect, the feedback loop 5 detects phase currents $I_u$, $I_v$ and $I_w$ by a phase current detection portion 50 arranged in the motor excitation circuit 38 and inputs into the second converter 51 for performing (u-v-w→d-q) conversion. The second converter 51 is given the estimated rotor rotating phase angle $\theta_e$ obtained by integrating the electrical angular speed $\omega_e$ of the motor outputted by the speed estimator 4 described later with the integrator 44, so as to convert the phase current values into q and d-axis current values $I_d$ and $I_q$. The q and d-axis current values $I_d$ and $I_q$ are respectively inputted into the subtractors 35 and 32.

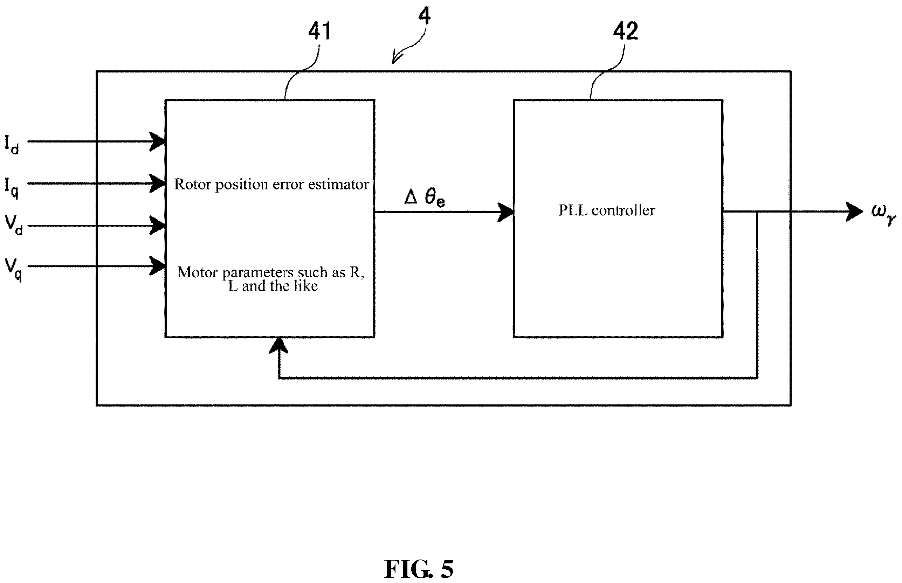

In another aspect, the speed estimator 4, as shown in Fig. 5, is composed of a rotor phase error estimator 41 and a PLL (Phase Locked Loop) controller 42. The rotor phase error estimator 41 calculates and estimates a phase error $\Delta\theta_e$ with the motor voltages $V_d(=V_d{}^*)$ and $V_q(=V_q{}^*)$, the motor currents $I_d$ and $I_q$, the motor parameters R and L and the like. R is a motor winding resistance; and L is a motor winding inductance.

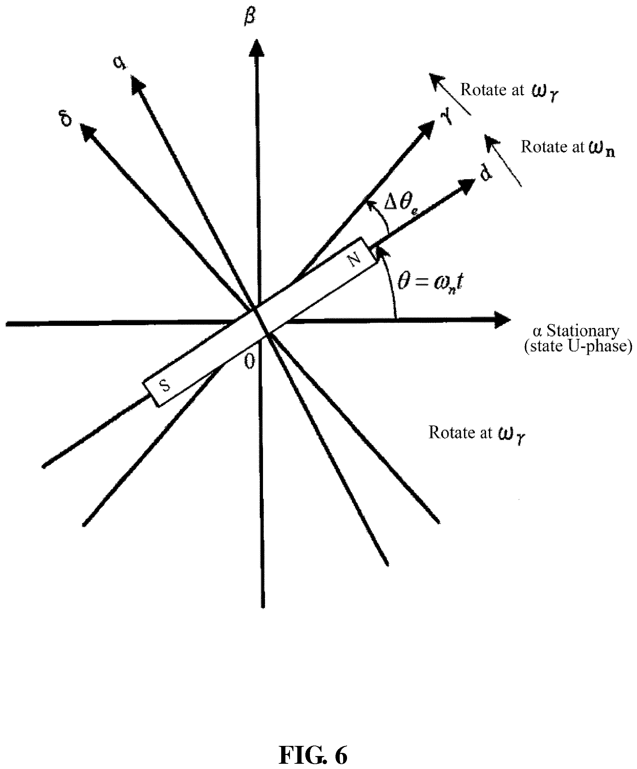

When the motor M is a permanent magnet synchronous motor, as shown in the coordinate system of Fig. 6, a rotor is rotated at an electrical angular speed $\omega_n$ in a d-q rotating coordinate system relative to stationary coordinate systems $\alpha$ and $\beta$; and rotating coordinates of $\gamma$-$\delta$ are generally estimated by a rotating speed estimation algorithm called as a sensorless algorithm.

Actually, although the magnetic pole exists on a d axis, a phase error of $\Delta\theta_e$ is also generated when estimating that the magnetic pole exists on a $\gamma$ axis.

Then, a rotor position error estimator 41, as an example, calculates the phase error $\Delta\theta_e$ according to the following equation.

$$\Delta\theta_e = \tan^{-1}\{(V_d\text{-}R \times I_d + \omega_\gamma \times L \times I_q)/(V_q\text{-}R \times I_q\text{-}\omega_\gamma \times L \times I_d)\} \qquad (5)$$

In order to rotate the motor M stably, a position of a d-q axis must be found out so as to coincide with an r-$\delta$ axis identified by the control unit 1. Namely, $\Delta\theta_e$→0 needs to be used as a target.

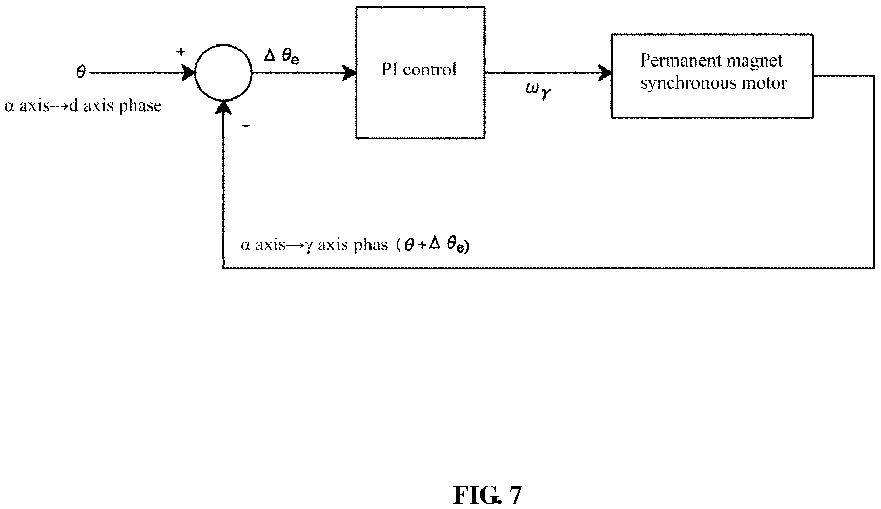

Therefore, the PLL controller 42 is used. A specific structure of the PLL controller 42 is shown in Fig. 7.

The PLL controller 42 uses PI control. $\omega_\gamma$ is an angular speed (angular frequency) of a three-phase voltage applied to the motor by the motor driving control portion 3; and certainly, the motor driving control portion 3 can output a free value in a manner of frequency conversion. It can be known from Fig. 6 that when $\omega_\gamma$ is increased, $\Delta\theta_e$ is large due to a speed difference with $\omega_n$, and when $\omega_\gamma$ is decreased, $\Delta\theta_e$ is small.

When $\Delta\theta_e$=0, $\omega_\gamma = \omega_n$, so that $\omega_\gamma$ can be used as an operation quantity for controlling $\Delta\theta_e$=0.

Conversely, when the motor is rotated stably, the control for making $\Delta\theta_e$ be substantially 0 can be maintained; and $\omega_\gamma$ outputted by the motor driving control portion 3 should be approximately equal to the motor rotating speed $\omega_n$, It is assumed that $\omega_\gamma = \omega_n$ is always true, then $|\Delta\theta_e|$ is increased and the motor cannot output an appropriate torque, causing out-of-synchronism (wherein the reference numeral of $\omega_\gamma$-$\omega_n$ is constant).

Based on the above contents, in the present embodiment, the angular speed $\omega_\gamma$ of the motor for applying the voltage is obtained and used as the electrical angular speed $\omega_e$ of the motor constituting a basis of the estimated angular speed value $\omega_m$. Moreover, a load detection portion 7 is arranged in the control unit C shown in Fig. 4 for utilizing the electrical angular speed $\omega_e$ of the motor estimated by the speed estimator 4 in a state that the command of the torque command generation portion 1 is stopped in a form of the estimated rotating speed value $\omega_e$ and measuring the amount of washings as the load magnitude.

The load detection portion 7 is configured in such a manner that a portion is installed on the microcomputer 6 in the form of a program and is executed and can output the rotating speed command value $\omega^*_m$ for measuring the load; a switch transferring portion 71 for transferring the torque command value $T^*$ and a torque command portion 72 for setting the torque command value $T^*$ to 0 are arranged on an input line of the torque control portion 2; and a transferring command can be outputted to the switch transferring portion 71. Moreover, a torque command value 0 is outputted to the motor control portion 3 from the torque command portion 72 to replace the output command of the speed controller 22 by switching a switch 71 from A to B. In addition, integral elements for integrating the estimated speed value $\omega_m$ outputted through a pole number calculation portion 43 by the speed estimator 4 are arranged inside.

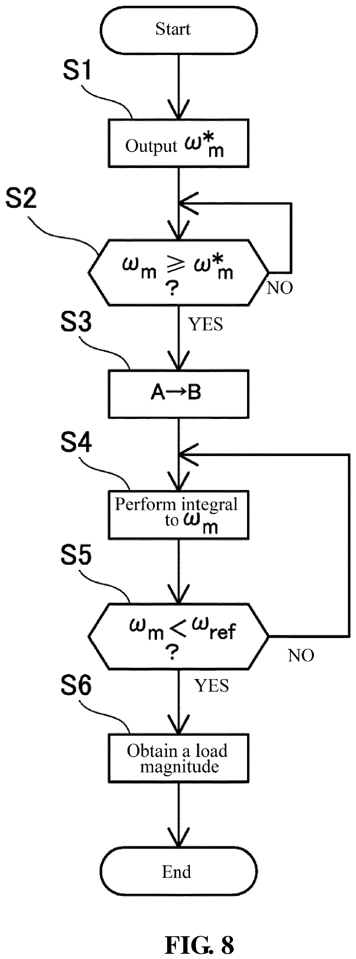

Fig. 8 is a flow chart illustrating a flow executed by the load detection portion 7. The flow of Fig. 8 is described below with reference to Fig. 4.

<Step S1>

Firstly, as in the washing and rinsing operations, the d-axis current command value I*$_d$ issued by a d-axis current command portion 34 is set to 0, and the command value $\omega$*$_m$ of the motor rotating speed is inputted in a step S1 in a state of setting a switch SW of the switch transferring portion 71 on an A side. Thus, the motor M is powered on and continues to output the required torque command value $T$* in order to maintain the motor rotating speed $\omega_m$ at the command value $\omega$*$_m$.

Accordingly, the q-axis current controller 33 outputs a q-axis voltage command value V*$_q$ required for flowing the q-axis current $I_q$ corresponding to the torque command value $T$*, and the d-axis current controller outputs a d-axis voltage command value V*$_d$ required for making the d-axis current $I_d$ as 0.

In addition, the first converter 37 converts the d and q-axis current command values V*$_d$ and V*$_q$ into the UVW three-phase voltages $V_u$, $V_v$ and $V_w$ and applies to the permanent magnet synchronous motor. It should be noted that the rotor rotating phase angle $\theta_e$ is given during (d-q→u-v-w) conversion.

The speed estimator 4 estimates the electrical angular speed $\omega_e$ of the motor according to the d and q-axis currents $I_d$ and $I_q$, the d and q-axis voltages $V_d$ and $V_q$ and the motor parameters (the inductance, the winding resistance and the like). The electrical angular speed $\omega_e$ is inputted as the estimated motor rotating speed $\omega_m$ into the load measurement portion 7 by the pole number calculation portion 43. In the present embodiment, the pole number calculation portion 43 is also considered as a portion of a function of the speed estimation portion, i.e., the speed estimator 4.

<Step S2>

In the Step S2, whether the motor rotating speed $\omega_m$ reaches the rotating speed command value $\omega$*$_m$ of the target value is judged. Then, if "yes", a step S3 is performed. A target rotating speed is set to, for example, 800 rpm.

<Step S3>

In the step S3, the switch W of the switch transferring portion 71 is switched from A to B, in a period of starting power-off of the motor. Thus, the torque command value $T$*=0 ($I$*$q$=0) is forcibly set, and the motor output torque T is 0 by sensorless vector control, i.e.,

$$J \times (d\omega_m/dt) + B \times \omega_m = 0 \qquad (2).$$

As shown in Fig. 3, the motor rotating speed $\omega_m$ is decreased under same conditions as inertial rotation.

It should be noted that if the voltages $V_u$, $V_v$ and $V_w$ applied to the motor M are cut off when the motor is powered off as in the present embodiment,

$$I_d = I_q = V^*{}_d = V^*{}_q = 0 \qquad (6).$$

This is the same as the condition when the motor is stopped, and the sensorless control is not satisfied, so the speed estimator 4 cannot estimate the speed.

Namely, in the control of $T$*=0, in the following motor voltage equation,

$$\begin{bmatrix} V_d \\ V_q \end{bmatrix} = \begin{bmatrix} R + pL & -\omega_e L \\ \omega_e L & R + pL \end{bmatrix} \begin{bmatrix} I_d \\ I_q \end{bmatrix} + \begin{bmatrix} 0 \\ \omega_e \Phi \end{bmatrix}$$

$$(7).$$

In a state of controlling in a manner of $I_d = I_q = 0$, since

$$\begin{bmatrix} V_d \\ V_q \end{bmatrix} = \begin{bmatrix} 0 \\ \omega_e \Phi \end{bmatrix} \qquad (8),$$

V*$_q \neq 0$ and the speed estimation is continued.

<Step S4>

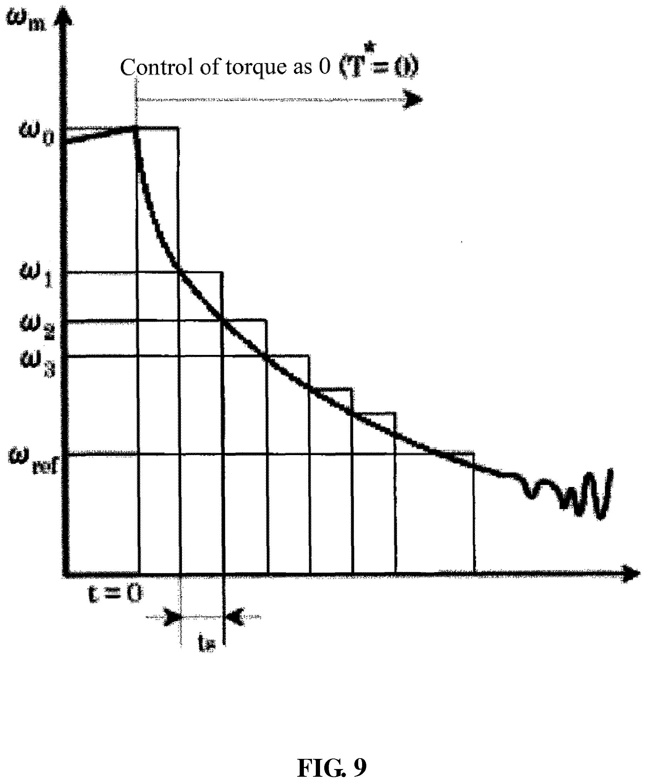

With execution of the step S3, in a step S4, as shown in Fig. 9, the estimated value $\omega_m$ of an angular speed in each sampling time is integrated according to the following equation.

$$L = \omega_0 t_s + \omega_1 t_s + \omega_2 t_s + \Lambda = \sum_{k=0} \omega_k t_s \qquad (9),$$

wherein L is the rotating quantity of the motor when the torque is controlled as 0, and $t_s$ is the sampling time (e.g., 10 ms).

In sensorless control, since the speed estimation becomes difficult when the motor rotating speed $\omega_m$ approaches 0, in principle, the sensorless control cannot be achieved when the rotating speed is 0 as long as no special technique is used.

Therefore, the integral is not performed when the rotating speed is less than $\omega_{ref}$, and a step S5 is executed.

<Step S5>

In the step S5, whether the rotating speed $\omega_m$ becomes less than the preset threshold value $\omega_{ref}$ is judged; if "not", the flow returns to the step S4; and if "yes", the flow proceeds to a step S6. The threshold value $\omega_{ref}$ is also given to the load measurement portion 7 in advance.

<Step S6>

In the step S6, the rotating quantity I of the motor is obtained as the load magnitude; and the load measurement flow is ended.

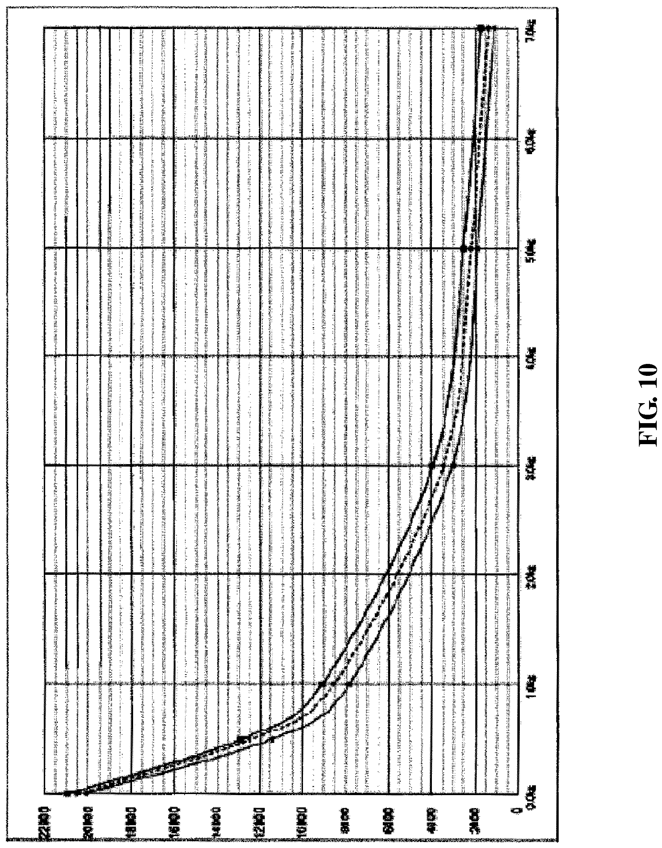

Fig. 10 shows a load magnitude detection result of the present embodiment. A horizontal axis represents a cloth load magnitude (kg), and a vertical axis represents the rotating quantity when the torque is controlled as 0. Implementation conditions are as follows: the motor power-on time is equal to 0.9 (sec), the target rotating speed in a motor power-on period is equal to 800 (rpm), the number of reverse rotations of the impeller is equal to 6 times, the threshold value $\omega_{ref}$ is equal to 50 (rpm), and the integral sampling time is equal to 10 (ms).

The vertical axis is a value obtained by adding "L" of the equation (9) at each reverse rotation of the impeller, i.e.,

$$\sum L = L1 + L2 + L3 + L4 + L5 + L6 \qquad (10).$$

As shown in the figure, it is confirmed that the rotating quantity inversely proportional to the load magnitude (the amount of the washings) of the horizontal axis can be obtained in excellent reproducibility on the vertical axis, and a load magnitude detection result substantially equivalent to that in an existing manner can be obtained.

Therefore, as long as the rotating quantity L calculated in the present embodiment is compared with the preset threshold values at multiple stages (such as low, medium and high levels) for determination and the volume of the water is controlled according to the determination result, the water can be saved properly with a simple and cheap structure.

An embodiment of the present invention is described above, but a specific structure of each portion is not only limited to the above embodiment.

For example, the switch SW for transferring the torque command value to 0 can also be arranged beyond the illustrated position as long as the switch SW is on the input line of the torque command portion.

In addition, although the case applied to the SPM motor is described in the above embodiment, the case is also applicable to an IPM motor and the like as long as the motor is the permanent magnet synchronous motor.

Further, although the rotating quantity is accumulated as the load magnitude in the above embodiment, the load magnitude can also be measured according to a deceleration rate of the rotating speed and the like.

Various variations can also be made to other structures without departing from the scope of the present invention.

**Claims**

1. A washing machine, comprising a permanent magnet synchronous motor M which drives, in a rotating manner, an impeller (15) for stirring washings in a washing drum (13), and a control unit C which controls the motor M, wherein the control unit C comprises:

a torque command generation portion (2) for generating a torque command according to a deviation between a command value of a motor rotating speed given as a control quantity and an estimated value of the motor rotating speed;

a motor driving control portion (3) for converting a deviation between a motor current during driving and a current command value corresponding to a torque command value into motor voltage command values so as to drive the motor M;

wherein a load measurement portion (7) is arranged in the control unit C and is configured to measure amount of washings as load magnitude according to the estimated value of the motor rotating speed estimated by the speed estimation portion (4) in a state that the command of the torque command generation portion (2) is stopped; **characterized in that** the washing machine further comprises a speed estimation portion for estimating a motor rotating speed by using motor currents and motor voltages associated with the motor voltage command values.

2. The washing machine according to claim 1, wherein
the load measurement portion (7) measures the load magnitude by utilizing the estimated value of the motor rotating speed estimated by the speed estimation portion (4) according to the motor voltage command value given to the motor M when the current command value of the motor driving control portion (3) is 0 by setting the torque command to 0.

3. The washing machine according to claim 1 or 2, wherein
the load measurement portion (7) performs integral to the estimated value of the motor rotating speed during preset load detection; and an integral value is used as the load magnitude.

4. The washing machine according to claim 3, wherein
a threshold value is preset in the load measurement portion (7); and the integral is stopped when the estimated value of the motor rotating speed is less than the threshold value during load detection.

**Patentansprüche**

1. Waschmaschine, umfassend einen Permanentmagnet-Synchronmotor M, der auf drehende Weise ein Schaufelrad (15) zum Bewegen von Wäsche in einer Waschtrommel (13) antreibt, und eine Steuereinheit C, die den Motor M steuert, wobei
die Steuereinheit C Folgendes umfasst:

einen Drehmomentbefehlserzeugungsabschnitt (2) zum Erzeugen eines Drehmomentbefehls gemäß einer Abweichung zwischen einem Befehlswert einer als Steuergröße gegebenen Motordrehzahl und einem geschätzten Wert der Motordrehzahl;
einen Motorantriebssteuerabschnitt (3) zum Umwandeln einer Abweichung zwischen einem Motorstrom während des Antreibens und einem einem Drehmomentbefehlswert entsprechenden Strombefehlswert in einen Motorspannungsbefehl, um den Motor M anzutreiben;
wobei ein Lastmessabschnitt (7) in der Steuereinheit C angeordnet ist und dazu konfiguriert ist, die Wäschemenge als Lastbetrag gemäß dem geschätzten Wert der Motordrehzahl zu messen, der von dem Drehzahlschätzabschnitt (4) in einem Zustand geschätzt wird, in dem der Befehl des Drehmomentbefehlserzeugungsabschnitts (2) aufgehoben ist; **dadurch gekennzeichnet, dass** die Waschmaschine ferner einen Drehzahlschätzabschnitt umfasst, um eine Motordrehzahl unter Verwendung von mit den Motorspannungsbefehlswerten assoziierten Motorströmen und Motorspannungen zu schätzen.

2. Waschmaschine nach Anspruch 1, wobei:
der Lastmessabschnitt (7) den Lastbetrag misst, indem er den geschätzten Wert der Motordrehzahl nutzt, der von dem Drehzahlschätzabschnitt (4) gemäß dem dem Motor M erteilten Motorspannungsbefehl geschätzt wird, wenn der Strombefehlswert des Motorantriebssteuerabschnitts (3) 0 ist, indem er den Drehmomentbefehl zu 0 setzt.

3. Waschmaschine nach Anspruch 1 oder 2, wobei:
der Lastmessabschnitt (7) das Integral des geschätzten Werts der Motordrehzahl während der Vorgabelasterfassung ausführt; und ein Integralwert als der Lastbetrag verwendet wird.

4. Waschmaschine nach Anspruch 3, wobei:

ein Grenzwert in dem Lastmessabschnitt (7) voreingestellt ist; und das Integral abgebrochen wird, wenn der geschätzte Wert der Motordrehzahl während der Lasterfassung geringer als der Grenzwert ist.

**Revendications**

1. Une machine à laver qui est équipée d'un moteur synchrone à aimant permanent M qui entraîne, en la faisant tourner, une turbine (15), afin d'agiter les articles à laver, à l'intérieur d'un tambour de lavage (13) et comporte un groupe de commande C qui permet de piloter le moteur M, et
ce groupe de commande C se compose des éléments suivants :

   une partie de production de commandes de couples de force (2) qui permet de produire une commande de couple de force en fonction d'un écart entre, d'une part, la valeur d'une commande d'une vitesse de rotation du moteur, qui représente une quantité de pilotage, et, d'autre part, une valeur estimée de la vitesse de rotation du moteur
   une partie de commande d'entraînement du moteur (3) qui convertit un écart entre, d'une part, le courant d'un moteur pendant un entraînement et, d'autre part, la valeur d'une commande de courant qui correspond à la valeur d'une commande de couple, en des valeurs de commandes de tension du moteur afin d'assurer l'entraînement du moteur M
   et une partie de mesure de charge (7), qui est implantée dans le groupe de commande C et est configurée pour mesurer le volume d'articles à laver sous la forme d'une magnitude de charge, en fonction de la valeur estimée pour la vitesse de rotation du moteur et cette estimation est basée sur la partie estimée de vitesse (4) à un état qui correspond à l'arrêt de la commande de la partie de production de commandes de couples de force (2), et se **caractérise par le fait que** cette machine à laver comporte, en outre, une partie d'estimation de la vitesse qui a pour but d'estimer une vitesse de rotation du moteur en utilisant les courants et tensions moteurs qui sont associés aux valeurs de commande de tension du moteur.

2. La machine à laver que décrit la revendication 1, si ce n'est que :
la partie de mesure de charge (7) mesure la magnitude de la charge en utilisant la valeur estimée pour la vitesse de rotation du moteur qu'a estimée la partie d'estimation de la vitesse (4) en fonction de la valeur de commande de tension du moteur communiquée au moteur M lorsque la valeur de commande du courant de la partie de commande d'entraînement du moteur (3) est égale à 0, en programmant la commande de couple de force sur 0.

3. La machine à laver que décrit la revendication 1 ou 2, si ce n'est que :
la partie de mesure de la charge (7) exécute l'intégral par rapport à la valeur estimée pour la vitesse de rotation du moteur durant la détection de charge prédéterminée, et une valeur intégrale est utilisée en tant que magnitude de la charge.

4. La machine à laver que décrit la revendication 3, si ce n'est que :
la valeur d'un seuil est prédéterminée dans la partie de mesure de charge (7) et que l'intégral s'arrête lorsque la valeur estimée pour la vitesse de rotation du moteur devient inférieure à la valeur du seuil durant la détection de charges.

**FIG. 1**

**FIG. 2**

**FIG. 3**

**FIG. 4**

EP 3 333 297 B1

FIG. 5

**FIG. 6**

α axis→d axis phase

θ

+

Δ$\theta_e$

PI control

$\omega_\gamma$

Permanent magnet
synchronous motor

−

α axis→γ axis phas ($\theta + \Delta\theta_e$)

**FIG. 7**

EP 3 333 297 B1

Start

S1

Output $\omega^*_m$

S2

$\omega_m \gtrless \omega^*_m$ ?

NO

YES

S3

A→B

S4

Perform integral to $\omega_m$

S5

$\omega_m < \omega_{ref}$ ?

NO

YES

S6

Obtain a load magnitude

End

**FIG. 8**

FIG. 9

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5115670 A
- JP 2002360970 A

- US 20110247148 A1